# EUROPEAN PATENT APPLICATION

(11) **EP 0 695 500 A1**
(43) Date of publication of application: **07.02.1996**
(21) Application number: 95110716.8
(22) Date of filing: 10.07.1995
(51) Int. Cl.: A01M 29/00, A01M 17/00

(54) **Improved deratization system**

(30) Priority: 02.08.1994 IT PD940143
(71) Applicant: MULTITECNO S.r.l., I-35129 Padova (IT)
(72) Inventor: Cortelazzo, Enrico, I-35135 Padova (IT)
(74) Representative: Modiano, Guido, Dr.-Ing.

(57) **Abstract**

An improved deratization system characterized in that it comprises a central control unit (11) that is capable of generating low-voltage signals or radio signals and is connected, by means of at least one low-voltage line (19) or by radio, to one or more receivers (20), each receiver being composed of a first section (22) for dialogue with the central control unit (11) and of a second section (23) at mains voltage to which one or more terminals (21) are connected; the second section (23) is driven by the first section (22) and being adapted to supply the terminals (21) with the energy to cause them to vibrate.

## Description

The present invention relates to an improved deratization system.

Among the many deratization methods now commercially available, there is one that uses the vibrations emitted by particular devices; these vibrations generate constantly different microseisms that are perceived by the mice; since the mice are stressed by these microseisms, they move away from the region affected by the vibrations.

This method is substantially embodied in two types of system.

Both systems are based on a central transmission unit that sends control signals to a plurality of vibrating remote terminals.

In a first one of these systems, the signal sent by the central unit directly energizes the remote terminal, whereas in a second type of system a central unit sends, by power-line carrier waves, a binary code that is adapted to energize each remote terminal according to a preset sequential logic.

A connection with a high-voltage (220 V) line is provided in both cases between the central unit and the receiver.

Although these systems achieve their task, they are affected by drawbacks that arise from their basic structure.

In particular, the drawbacks that are most felt are listed hereafter.

First of all, the lines that connect the central control unit and the terminal, whether constituted by an existing electric network or by a dedicated network, are at high voltage, and this entails considerable problems in design and installation, since they are governed by CEI standards.

Furthermore, as regards in particular the first system, in view of the above remarks, the number of terminals that can be connected to the central unit is necessarily limited, since it is linked to the power stage that is present in said central control unit.

A consequence of this is that if the system is large, it must be controlled by means of a series of central units, which must be located in points that are isocentric with respect to the arrangement of the terminals in order to minimize installation costs.

Furthermore, if all the central units must be connected to the same electrical cabinet due to logistic reasons, laying the connecting cables in a radial layout is very expensive.

Furthermore, any expansion of the system entails purchasing new central units and laying new connecting lines.

Therefore, controlling the operation of a large system entails monitoring several central units.

This monitoring is performed by means of LEDs, which clearly have only two possible states (on or off) and must therefore be "interpreted" by expert personnel.

As regards the second system, which in theory would be ideal from the point of view of installation problems and from the point of view of costs, said second system in practice encounters considerable problems in operation due to noise generated on the network, which distorts the signals transmitted among the various parts.

In addition to this, signal losses are also observed, therefore requiring systems composed of a series of central units, each serving a limited number of terminals located close thereto.

The aim of the present invention is to provide an improved deratization system that solves the drawbacks shown by conventional system types.

In relation to this aim, an object of the present invention is to provide a system in which installation of high-voltage cables is minimized.

Another object of the present invention is to provide a system in which the number of terminals that can be connected to the central unit can be expanded at will.

Another object of the present invention is to provide a system whose configuration is flexible and can be set by the user by means of guided interfacing devices.

Another object of the present invention is to provide a system in which any number of terminals is managed by a single central unit.

Another object of the present invention is to provide a system in which expansion entails simple cascade connections to the existing circuits.

Another object of the present invention is to provide a system in which any anomalies indicated by the terminals are sent to the user interface devices.

This aim, these objects, and others which will become apparent hereinafter are achieved by an improved deratization system, characterized in that it comprises a central control unit that is capable of generating low-voltage signals or radio signals and is connected, by means of at least one low-voltage line or by radio, to one or more receivers, each receiver being composed of a first section for dialogue with said central unit and of a second section at mains voltage to which one or more terminals are connected, said second section being driven by the first section and being adapted to supply said terminals with the energy to cause them to vibrate.

Further characteristics and advantages of the invention will become apparent from the detailed description of an embodiment thereof, illustrated only by way of non-limitative example in the accompanying drawings, wherein:
Fig. 1 is a block diagram of a deratization system according to the invention;
Fig. 2 is a block diagram of the central control unit included in the system;
Fig. 3 is a block diagram of one of the receivers included in the system.

With reference to the figures, an improved deratization system according to the invention is generally designated by the reference numeral 10.

The system 10 comprises a central control unit 11, which, supplied by the line 12 at mains voltage, for example 220 V, is capable of generating low-voltage signals, and is constituted by: an electronic power supply module 13, an electronic control module (microprocessor) 14, and an electronic driving module 15 for driving the low-voltage signal.

The use of the central control unit 11 is ensured by a visualization module 16, which comprises for example an alphanumeric display that is connected to said central control unit 11 to visualize several messages, and a keyboard 17 for setting the parameters of the system.

The central control unit 11 also includes a rewritable non-volatile memory 18 for storing the operating parameters of the system.

One or more low-voltage connections 19, depending on the number of receivers to be controlled, branch out from the central control unit 11.

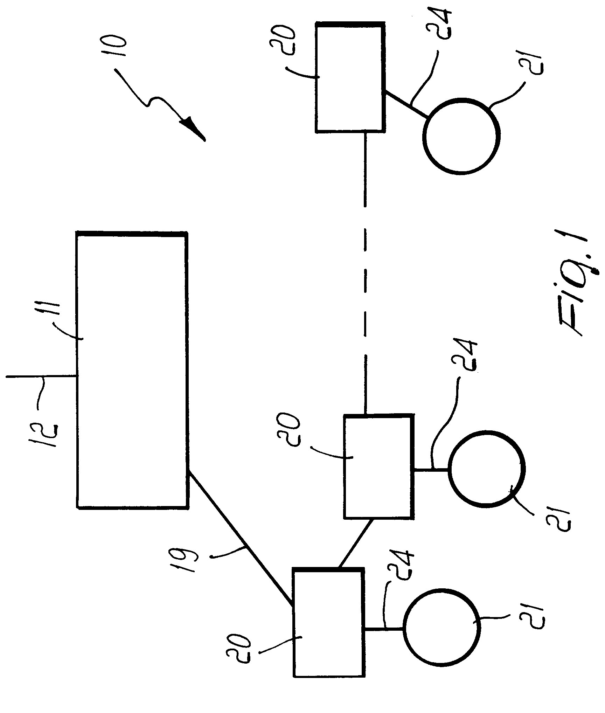

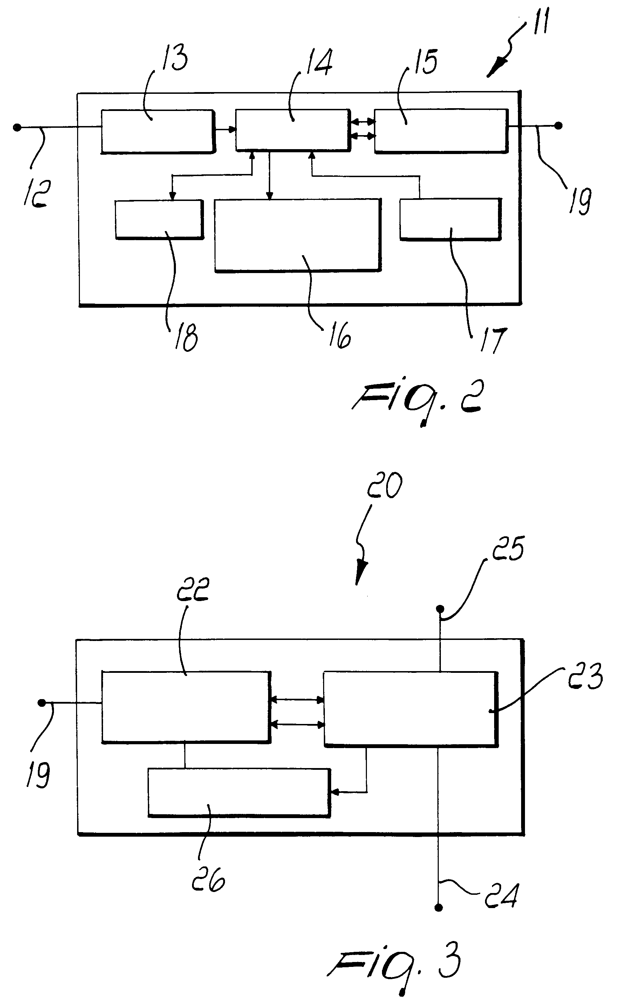

Figure 1 shows, by way of example, three receiving blocks designated by the reference numeral 20.

Each one of the receivers 20 controls at least one corresponding terminal 21 of a per se known type.

Each receiver 21 comprises a first low-voltage section 22 that is composed of a block, not shown, for receiving the low-voltage signal from the central unit by means of a connection 19, and a block, also not shown, for controlling the terminal and for sending signals to the central unit.

The receiver 21 also includes a second high-voltage section 23 that is constituted by a terminal control module (power section connected by a line 24 to the terminal 21 and by the line 25 to the high-voltage supply network) and by a visualization module 26, for example of the type constituted by a display.

Merely for mnemonic purposes, it is noted that said terminals 21 are usually constituted by a vibrating electromagnetic mass.

In practice, operation is as follows: the central control unit 11 has the purpose of supervising the operation of the entire system 10 and of checking that it remains constantly free from anomalies.

Since the central control unit 11 is provided with alphanumeric displays 16 and with a keyboard 17 for setting the parameters of the system, the user can configure said system 10 as desired and in a flexible manner.

The rewritable non-volatile memory 18 furthermore allows to vary the configuration of the system 10 as desired (adding or removing terminals 21).

The central control unit 11 sends coded signals to the receivers 20 over the low-voltage network.

The receivers 20 are powered directly by the ordinary mains network, which in this case is at 220 V (generally at the local mains voltage, for example 380 V, 125 V, etcetera), and have the purpose of driving the respective terminal 21 according to the operating program of the central control unit.

Each one of the receivers 20 also has the purpose of reporting to the central control unit 11 any anomalies in the operation of the respective terminals 21; this report can also be visualized locally.

In practice it has been observed that the intended aim and objects have been achieved; in particular, it should be stressed that the high-voltage network has been reduced considerably with respect to conventional types; actually, in the system according to the invention said high-voltage network is reduced substantially to the direct connection of the central unit and of the receivers on an exclusively local position.

It should also be noted that since the dedicated connecting network is at low voltage, it is not subjected to CEI standards for high-voltage systems, thus allowing to significantly reduce the costs for installation and possible expansion.

It is also noted that since the dedicated network is at low voltage, expansion of the system is very easy and substantially unlimited, since it is sufficient to merely purchase the receivers, which can be cascade-connected to the lines that have already been laid (connections are currently in parallel).

Furthermore, the number of receivers 20 that can be connected to the central control unit 11 is variable and can be expanded as desired, since the power section is not in the central control unit but in the receiver.

Finally, it should be noted that anomalies are indicated explicitly by displays instead of by LEDs (which must be "interpreted"), thus considerably facilitating troubleshooting.

The system according to the invention thus conceived is susceptible of numerous modifications and variations, all of which are within the scope of the inventive concept.

Accordingly, in a different embodiment, the transmission of the signals between the central control unit and the receivers occurs by radio instead of over a low-voltage network.

For this purpose, the driving module 15 in the central unit 11 is provided with a radio transceiver block and the receiver 20 is also provided with a radio transceiver block; the low-voltage connecting line 19 between the central control unit and the receivers is of course eliminated.

All the details may furthermore be replaced with other technically equivalent elements.

In practice, the materials employed, so long as they are compatible with the contingent use, may be any according to the requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An improved deratization system, characterized in that it comprises a central control unit (11) that is capable of generating signals and is connected to one or more receivers (20), each receiver being composed of a first section (22) for dialogue with said central control unit (11) and of a second section (23) at mains voltage to which one or more terminals (21) are connected, said second section (23) being driven by the first section (22) and being adapted to supply said terminals (21) with the energy to cause them to vibrate.

2. An improved deratization system according to claim 1, characterized in that said central control unit (11) generates low-voltage signals and is connected to one or more receivers (20) by at least one low-voltage line (19).

3. An improved deratization system according to claim 1, characterized in that said central control unit (11) generates radio signals and is connected to one or more receivers (20) by radio.

4. An improved deratization system according to claim 1, characterized in that said central control unit (11) comprises an electronic power supply module (13), an electronic module (14) with a control microprocessor, and an electronic driving module (15) for driving the signal.

5. An improved deratization system according to claim 1, characterized in that said central control unit (11) comprises a keyboard (17) for setting the parameters of said system.

6. An improved deratization system according to claim 1, characterized in that said central control unit (11) comprises a visualization module (16) that is constituted by a display for visualizing messages.

7. An improved deratization system according to claim 1, characterized in that said first section (22) of said receiver (20) comprises a block for receiving the signal from said central control unit (11) and a block for controlling said terminal (21) and for sending signals to said central control unit (11).

8. An improved deratization system according to claim 1, characterized in that said second section (23) of said receiver (20) comprises a terminal control module for the control of said terminal.

9. An improved deratization system according to claim 1, characterized in that said receiver (20) comprises a visualization module (26) that is constituted by a display.

10. An improved deratization system according to claim 1, characterized in that said terminal (21) is constituted by a vibrating electromagnetic mass.
